(19) Europäisches Patentamt
European Patent Office
Office européen des brevets

(11) Publication number: **0 014 031**
**A1**

(12) **EUROPEAN PATENT APPLICATION**

(21) Application number: **80300041.3**

(22) Date of filing: **04.01.80**

(51) Int. Cl.³: **C 09 B 29/08**, C 09 B 29/00, D 06 P 3/06

(30) Priority: **15.01.79 GB 7901350**

(43) Date of publication of application: **06.08.80**
**Bulletin 80/16**

(84) Designated Contracting States: **BE CH DE FR GB IT**

(71) Applicant: **IMPERIAL CHEMICAL INDUSTRIES LIMITED, Imperial Chemical House Millbank, London SW1P 3JF (GB)**

(72) Inventor: **Herbert, John Albert Leslie, 52 Rudgwick Drive, Brandlesholme Bury, Lancs (GB)**
Inventor: **Yelland, Michael, Edgeside House Ashworth Lane, Waterfoot Rossendale, Lancs (GB)**

(74) Representative: **Stephenson, Kenneth et al, Imperial Chemical Industries Limited Legal Department: Patents Thames House North Millbank, London SW1P 4QG (GB)**

(54) **Water-soluble monoazo dyes of the azobenzene series, their preparation and process for the colouration of polyamide textile materials.**

(57) Water-soluble monoazo dyes having the formula:

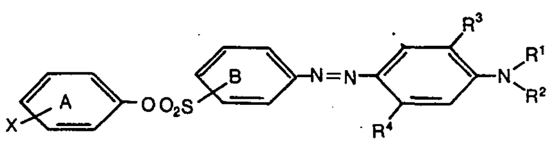

in which rings A and B may carry other substituents, X represents hydrogen, carboxy or sulpho, $R^1$ represents hydrogen or an optionally substituted alkyl, aralkyl or aryl radical, $R^2$ represents hydrogen or an optionally substituted alkyl or aralkyl radical, $R^3$ represents hydrogen, halogen, $C_{1-4}$alkyl or $C_{1-4}$alkoxy and $R^4$ represents hydrogen, halogen, hydroxy, $C_{1-4}$alkyl, acylamino, sulpho or carboxy, the substituents being such that the dye molecule contains either one or two sulpho groups.

The dyes are applicable as acid dyes to natural and synthetic polyamide textiles on which they give yellow to red shades.

EP 0 014 031 A1

This invention relates to monoazo dyes and their application to textile materials.

According to the invention, there are provided water-soluble monoazo dyes which, in the form of the free acids, have the formula:

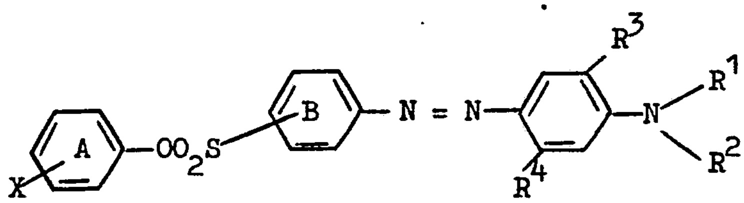

(I)

in which rings A and B may carry other substituents, X represents hydrogen, carboxy or sulpho, $R^1$ represents hydrogen or an optionally substituted alkyl, aralkyl or aryl radical, $R^2$ represents hydrogen or an optionally substituted alkyl or aralkyl radical, $R^3$ represents hydrogen, halogen, $C_{1-4}$alkyl or $C_{1-4}$alkoxy and $R^4$ represents hydrogen, halogen, hydroxy, $C_{1-4}$alkyl, acylamino, sulpho or carboxy, the substituents being such that the dye molecule contains either one or two sulpho groups.

Other substituents which may be present on ring A in addition to those shown in the formula include halogen atoms, especially chlorine and bromine, $C_{1-9}$alkyl, $C_{1-4}$alkoxy and cycloalkyl radicals. Other substituents which may be present on ring B include halogen atoms, especially chlorine and bromine, $C_{1-4}$alkyl, $C_{1-4}$alkoxy, sulpho and carboxy radicals.

Optionally substituted alkyl radicals which may be represented by $R^1$ and $R^2$ include, in particular, optionally substituted $C_{1-4}$alkyl radicals, suitable substituents being halogen, hydroxy, cyano, acyloxy and alkoxycarbonyl. Optionally substituted aralkyl radicals which may be represented by $R^1$ and $R^2$ include benzyl and 3-sulphobenzyl.

Optionally substituted aryl radicals which may be represented by $R^1$ include optionally substituted phenyl radicals.

Acylamino radicals which may be represented by $R^4$ include acetylamino and benzoylamino. The dyes of the invention preferably contain one sulphonic acid group and this is preferably X or $R^4$.

Particularly valuable dyes within the scope of Formula I have a single sulphonic acid group and are represented by the formula:

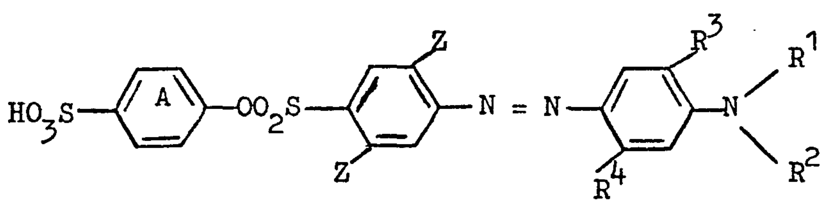

(II)

in which ring A carries no additional substituents, Z represents hydrogen or chlorine, $R^1$ and $R^2$ are optionally substituted alkyl radicals, $R^3$ is hydrogen or $C_{1-4}$alkyl and $R^4$ is acylamino.

The dyes of the invention may be prepared by diazotising a primary amine of the formula:

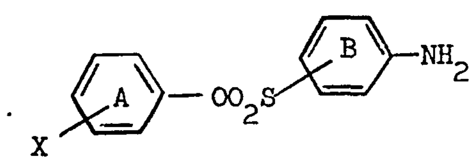

(III)

and coupling the resulting diazo compound with a coupling component of the formula:

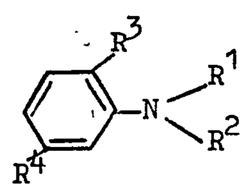

(IV)

the symbols A, B, X, $R^1$, $R^2$, $R^3$ and $R^4$ having the meanings given above, the primary amine and the coupling component together containing either one or two sulphonic acid groups.

Primary amines of Formula III may be prepared by condensing a nitro- or acylaminobenzenesulphonyl chloride of the formula:

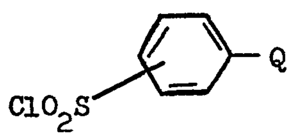

(V)

with a phenol of the formula:

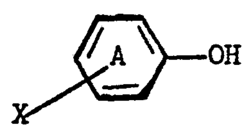

(VI)

under alkaline conditions followed by reduction of the nitro group or acid hydrolysis of the acylamino group. In Formula V, the symbol Q represents a nitro or acylamino group and ring B may be substituted as previously stated. In Formula VI, the symbol X has the meaning given above and ring A may be substituted as previously stated.

Suitable sulphonyl chlorides of Formula V include p-acetylaminobenzenesulphonyl chloride, 2-methyl-5-acetylaminobenzenesulphonyl chloride, 3- and 4-nitrobenzenesulphonyl chlorides, 2-methoxy-5-acetylaminobenzene sulphonyl chloride and 3-chloro-4-acetylaminobenzenesulphonyl chloride.

Suitable phenols of Formula VI include phenol, o, m and p-cresols, 2,5-dimethylphenol, 2,6-dimethylphenol, 2,4-dimethylphenol, p-tertiarybutylphenol, p-amylphenol, 4-cyclohexylphenol, 4-chlorophenol, 2-methoxyphenol, 4-methoxyphenol, phenol-4-sulphonic acid and p-hydroxybenzoic acid.

Suitable coupling components of Formula IV include 3-acetylamino-N,N-diethylaniline, 2-methyl-5-acetylamino-N,N-diethylaniline, 3-benzoylamino-N,N-diethylaniline, 3-acetylamino-N,N-bis-β-hydroxyethylaniline, 3-benzoylamino-N,N-bis-β-cyanoethylaniline, 3-benzoylamino-N-benzyl-N-ethylaniline, 3-methyl-N,N-diethylaniline, 5-acetylamino-2-methoxy-N-ethylaniline, 5-acetylamino-2-methyl-N-benzyl-N-ethylaniline, 5-acetylamino-2-methyl-N-β-cyanoethyl-N-ethylaniline, 5-acetylamino-2-methoxy-N,N-diethylaniline, 5-acetylamino-2-methoxy-N,N-bis-β-hydroxyethylaniline, 5-benzoylamino-2-methyl-N-ethylaniline, 5-benzoylamino-2-methyl-N,N-diethylaniline, 5-benzoylamino-2-methoxy-N-benzyl-N-ethylaniline, 3-acetylamino-N-ethyl-N-β-acetoxyethylaniline, 3-acetylamino-N,N-bis-β-acetoxyethylaniline, 5-acetylamino-2-methyl-N,N-bis-β-acetoxyethylaniline, 3-acetylamino-N-ethyl-N-β-ethoxycarbonylethylaniline, 3-acetylamino-N-β-chloroethylaniline, 5-acetylamino-2-chloro-N-ethyl-N-β-hydroxyethylaniline, 5-acetylamino-2-methoxy-N-β-cyanoethylaniline, 3-N,N-diethylaminobenzoic acid, 3-N,N-diethylaminobenzenesulphonic acid, N-ethyl-N-3'-sulphobenzylaniline, 3-methyl-N-ethyl-N-3'-sulphobenzylaniline, N,N-dibenzylaniline, 3-methyl-N,N-dibenzylaniline, 3-methyl-N,N-dibenzylaniline, 3-chloro-N,N-bis-β-hydroxyethylaniline, diphenylamine and N-methyldiphenylamine.

The reactions leading to the formation of the dyes of the invention may be performed using conditions that have been fully described in the prior art for such reactions. Similarly, the dyes may be isolated by known methods and, as in the case of other dyes containing sulphonic acid groups, it is often convenient to isolate and use the dyes in the form of their water-soluble salts, particularly their alkali metal or

ammonium salts and especially sodium salts. It is to be understood that the invention relates to both the free acids and their salts.

The dyes of the invention are suitable for applying to polvamide textile materials such as wool and silk but especially to synthetic polyamide textile materials, for example nylon 66 and nylon 6, using any of the general methods known for the application of acid dyes to such materials. The dyes provide yellow to red shades which have a high degree of fastness to wet treatments and to light and exhibit little or no phototropism.

The invention is illustrated but not limited by the following Examples in which all parts and percentages are by weight.

Example 1

A solution of 4.6 parts of sodium nitrite in 30 parts of water is added to a solution of 19.8 parts of 4-phenoxysulphonylaniline-4'-sulphonic acid in 600 parts of water and 8 parts of 32% sodium hydroxide at 0-5°C. 30 Parts of 35% hydrochloric acid are then added and stirring is continued at 0-5°C for a further 30 minutes. The excess nitrous acid is then destroyed and the diazo suspension is added to a stirred solution of 16.1 parts of 3-benzoylamino-N,N-diethylaniline in 600 parts of water and 12 parts of 35% hydrochloric acid at 0-5°C. Saturated sodium acetate solution is then added to adjust the pH to 4 and stirring at 0-5°C is continued for 2 hours. 32% Sodium hydroxide solution is then added to adjust the pH to 9 and, after heating to 40°C, 60 parts of sodium chloride are added. The precipitate is filtered off, washed with 2% brine solution and dried.

When applied to nylon 66 from a weakly acid bath, a strong scarlet shade is obtained which exhibits good wet fastness and light fastness.

The following Table gives further Examples of dyestuffs of the invention which may be obtained by diazotising the amine listed in the second column and coupling with the para-coupling amine listed in the third column. The shades obtained on nylon are listed in the fourth column.

| Example | Amine | Coupling Component | Shade |
|---|---|---|---|
| 2 | 4-phenoxysulphonyl-aniline | N,N-diethylaniline-3-sulphonic acid | Orange |
| 3 | " | N-benzyl-N-ethyl-aniline-3'-sulphonic acid | " |
| 4 | 4-phenoxysulphonyl-aniline-4'-sulphonic acid | diphenylamine | Scarlet |
| 5 | " | 3-chloro-N,N-bis-β-hydroxyethylaniline | Orange |
| 6 | " | N-benzyl-N-ethylaniline | " |
| 7 | " | N-benzyl-N-ethyl-m-toluidine | Scarlet |
| 8 | " | 2-methyl-5-acetylamino-N,N-diethylaniline | Bluish-red |
| 9 | " | 2-chloro-N-benzylaniline | Reddish-yellow |
| 10 | 2,5-dichloro-4-phenoxysulphonyl-aniline | N,N-diethylaniline-3-sulphonic acid | Bluish-red |
| 11 | " | N-benzyl-N-ethylaniline-3'-sulphonic acid | Red |
| 12 | 2,5-dichloro-4-phenoxysulphonyl-aniline-4'-sulphonic acid | 2-chloro-N-benzylaniline | Orange |
| 13 | " | N-benzyl-N-ethylaniline | Red |
| 14 | " | 3-acetylamino-N,N-diethylaniline | Bluish-red |
| 15 | " | 3-benzoylamino-N,N-diethylaniline | " |

| Ex. | Amine | Coupling Component | Shade |
|---|---|---|---|
| 16 | 2-chloro-4-phenoxy sulphonylaniline-4'-sulphonic acid | 3-acetylamino-N,N-diethylaniline | Bluish-red. |
| 17 | 4-(2',5'-dimethyl) phenoxysulphonyl aniline | N,N-diethylaniline-3-sulphonic acid | Red |
| 18 | 4-(3'-methyl) phenoxysulphonyl aniline | " | " |
| 19 | 4-phenoxysulphonyl aniline-4'-sulphonic acid | 3-acetylaminoaniline | Scarlet |
| 20 | 2,5-dichloro-4-phenoxysulphonyl aniline-4'-sulphonic acid | " | Red |
| 21 | 4-phenoxysulphonyl aniline-4'-sulphonic acid | 5-acetylamino-2-methoxyaniline | " |
| 22 | " | 5-acetylamino-2-methylaniline | Orange |
| 23 | 4-methyl-3-phenoxy sulphonylaniline-4'-sulphonic acid | 3-acetylamino-N,N-diethylaniline | " |
| 24 | " | 3-methyl-N-ethyl-N-benzylaniline | " |
| 25 | 2,5-dichloro-4-phenoxysulphonyl aniline-4'-sulphonic acid | 5-acetylamino-2-methoxyaniline | Very bluish-red |
| 26 | " | 5-acetylamino-2-methylaniline | Bluish red |

| Ex. | Amine | Coupling Component | Shade |
|---|---|---|---|
| 27 | 2-chloro-4-phenoxy sulphonylaniline-4'-sulphonic acid | 2-chloro-N-benzyl aniline | Orange |
| 28 | 2,5-dichloro-4-phenoxysulphonyl aniline-4'-sulphonic acid | " | Scarlet |
| 29 | 4-phenoxysulphonyl aniline-4'-sulphonic acid | 3-acetylamino-N,N-β-hydroxyethylaniline | Red |
| 30 | " | 3-methyl-N,N-dibenzyl aniline | " |
| 31 | " | N,N-diethylaniline-3-sulphonic acid | " |

## CLAIMS

1. A water-soluble monoazo dye which, in the form of the free acid, has the formula:

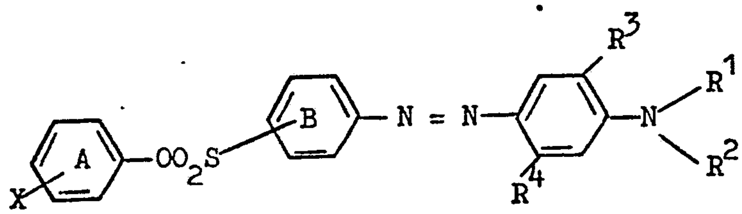

in which rings A and B may carry other substituents, X represents hydrogen, carboxy or sulpho, $R^1$ represents hydrogen or an optionally substituted alkyl, aralkyl or aryl radical, $R^2$ represents hydrogen or an optionally substituted alkyl or aralkyl radical, $R^3$ represents hydrogen, halogen, $C_{1-4}$alkyl or $C_{1-4}$alkoxy and $R^4$ represents hydrogen, halogen, hydroxy, $C_{1-4}$alkyl, acylamino, sulpho or carboxy, the substituents being such that the dye molecule contains either one or two sulpho groups.

2. A water-soluble monoazo dye according to claim 1 wherein X is hydrogen or sulpho, ring A may optionally be substituted by one or two $C_{1-4}$ alkyl groups, ring B may optionally be substituted by one or two substituents selected from chlorine and $C_{1-4}$ alkyl, $R^1$ is hydrogen, $C_{1-4}$ alkyl which may be substituted by hydroxy, benzyl, sulphobenzyl or phenyl, $R^2$ is hydrogen, $C_{1-4}$ alkyl which may be substituted by hydroxy, or benzyl, $R^3$ is hydrogen, chlorine, $C_{1-4}$ alkyl or $C_{1-4}$ alkoxy and $R^4$ is hydrogen, chlorine, $C_{1-4}$ alkyl, acetylamino, benzoylamino or sulpho.

3. A water-soluble monoazo dye according to claim 1 or claim 2 which contains only one sulphonic acid group.

4. A water-soluble monoazo dye according to claim 3 having the formula:

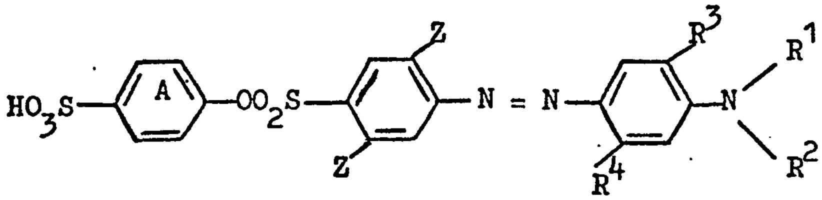

in which ring A carries no additional substituents, Z represents hydrogen or chlorine, $R^1$ and $R^2$ are optionally substituted alkyl radicals, $R^3$ is hydrogen or $C_{1-4}$alkyl and $R^4$ is acylamino.

5. A method for the preparation of a water-soluble monoazo dye as defined in claim 1 which comprises diazotising a primary amine of the formula:

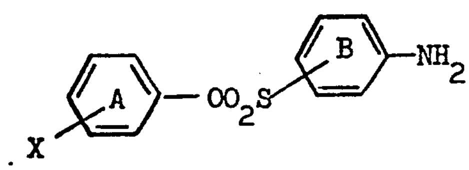

and coupling the resulting diazo compound with a coupling component of the formula:

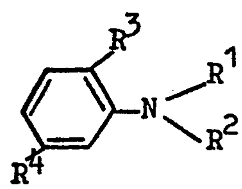

the symbols A, B, X, $R^1$, $R^2$, $R^3$ and $R^4$ having the meanings given in claim 1, the primary amine and the coupling component together containing either one or two sulphonic acid groups.

6. A process for the coloration of polyamide textile materials which comprises applying thereto a water-soluble monoazo dye as defined in claim 1.

KS/BH
2.1.80.

European Patent Office

# EUROPEAN SEARCH REPORT

0014031

Application number

EP 80 30 0041

| DOCUMENTS CONSIDERED TO BE RELEVANT | | | CLASSIFICATION OF THE APPLICATION (Int. Cl. ) |
|---|---|---|---|
| Category | Citation of document with indication, where appropriate, of relevant passages | Relevant to claim | |
| A | GB - A - 901 692 (COMPAGNIE FRANCAISE DES MATIERES COLORANTES)<br>* Claims 1-9 *<br>---- | 1 | C 09 B 29/08<br>29/00<br>D 06 P 3/06 |

TECHNICAL FIELDS SEARCHED (Int.Cl. )

C 09 B 29/08
29/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-04-1980 | DELANGHE |

EPO Form 1503.1 06.78